# EUROPÄISCHE PATENTSCHRIFT

(11) **EP 0 568 538 B1**
(45) Veröffentlichungstag und Bekanntmachung des Hinweises auf die Patenterteilung: **14.02.1996**
(21) Anmeldenummer: 92900083.4
(22) Anmeldetag: 03.12.1991
(51) Int. Cl.: B60K 17/22

(54) **ANTRIEBSAGGREGAT FÜR KRAFTFAHRZEUGE**
DRIVE ASSEMBLY FOR MOTOR VEHICLES
ENSEMBLE D'ENTRAINEMENT POUR VEHICULES A MOTEUR

(30) Priorität: 30.01.1991 WO PCT/EP91/00167; 19.09.1991 DE 4131163
(43) Veröffentlichungstag der Anmeldung: 10.11.1993
(73) Patentinhaber: Dr.Ing.h.c. F. Porsche Aktiengesellschaft, D-70435 Stuttgart (DE)
(72) Erfinder: HAVEMANN, Kim, D-7251 Weissach (DE); VON SIVERS, Rolf, D-7255 Rutesheim (DE); LAYHER, Ulrich, D-7126 Sersheim (DE); MUTTER, Clemens, D-7538 Keltern-Weiler (DE); WACKER, Bernd, D-7251 Weissach (DE)
(86) Internationale Anmeldenummer: EP9102297
(87) Internationale Veröffentlichungsnummer: WO9213734

(56) Entgegenhaltungen:
- EP-A- 0 005 839
- EP-A- 0 115 232
- DE-A- 3 044 288
- DE-A- 3 331 580
- DE-A- 3 417 227
- DE-C- 682 786
- FR-A- 2 469 311
- GB-A- 507 497
- GB-A- 972 754
- GB-A- 2 096 952

## Beschreibung

Die Erfindung bezieht sich auf ein Antriebsaggregat für Kraftfahrzeuge nach dem Oberbegriff des Anspruchs 1.

Aus der DE-PS 34 17 227 ist ein Antriebsaggregat für ein Kraftfahrzeug bekannt, das einen vornliegenden Motor und ein hintenliegendes Getriebe umfasst und diese Einheiten über ein Zentralrohr verbunden sind. Innerhalb des Rohres ist eine Antriebswelle angeordnet, die eine Antriebsverbindung zwischen Motor und Getriebe herstellt. Zur Vermeidung der Übertragung von tieffrequenten Schwingungen vom Motor zum Getriebe, insbesondere beim Überfahren von Bodenwellen oder dergleichen, dient ein torsionssteifes und dünnwandiges metallisches Wellrohr, das aber nicht gezielt auf die Hauptanregungsrichtungen des Motors auslegbar ist, sondern eine gelenkige Verbindung darstellt.

Aufgabe der Erfindung ist es, ein Antriebsaggregat zu schaffen, das eine gezielte Abkoppelung von Schwingungen des Motors, insbesondere hochfrequente Schwingungen, hervorgerufen durch unausgeglichene Massenkräfte und -momente, zum übrigen Antriebsaggregat gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Nachteile des Zentralrohrkonzepts hinsichtlich Schwingungsanregungen vermieden werden, aber gleichzeitig die dem Zentralrohr typischen Vorteile beibehalten werden. Diese bestehen insbesondere in einer geringen Anzahl von Lagerstellen des Aggregats im Fahrzeug und in einer großen Abstützbasis für die Radantriebsmomente.

Es treten im Betriebsdrehzahlbereich meist ausgeprägte Biege- und Torsionsresonanzen des Gesamtaggregats auf, die vorzugsweise durch den Motor angeregt werden. Zur Vermeidung dieser Resonanzen ist das Aggregat in zwei Schwingungssysteme unterteilt, in der weise, daß der Motor vom übrigen Aggregat, wie dem Getriebe mit verbundenem Zentralrohr, mittels einer Abkoppelungseinrichtung, wie z.B. einem Verbindungsgelenk, abgekoppelt wird. Diese Einrichtung bzw. das Gelenk ist so abzustimmen, daß die Hauptanregungsrichtungen bzw. -ebenen des Motors in Hoch- und Querrichtung sowie bei Taumelanregung berücksichtigt werden.

So kann in vorteilhafter Weise ein Gelenk je nach Bauart des Motors und seinen Hauptanregungsrichtungen zwischengeschaltet werden, mit dem eine torsionssteife und biegemomentfreie Abkoppelung entweder in einer Y-Ebene oder in einer Z-Ebene erzielt wird. Eine andere Ausführung beinhaltet ein Gelenk, das eine torsionssteife und biegemomentfreie Abkoppelung in einer Z-und Y-Ebene gleichzeitig bewirkt. Auch ist eine Ausführung eines Gelenks, wie z.B. ein elastischer Ring, möglich, mit dem eine torsionsweiche und biegemomentfreie Abkoppelung erzielt wird.

Bei einer torsionsweichen Abkoppelung des Motors ist zur Abstützung der Motorantriebsmomente im Bereich des Getriebes eine aufbauseitige Abstützung über zwei an einer Konsole angeordnete Lager erforderlich.

Das Verbindungsgelenk sollte möglichst nahe am Motor angeordnet sein, um bei Bewegungen desselben große Wege am Gelenk zu vermeiden. Auch sollte ein zusätzliches Lager am Zentralrohr mit einer möglichst großen Basis zum hinteren Lager des Getriebes angeordnet sein.

Das Verbindungsgelenk kann je nach den Erfordernissen als Rundschnurring, als Elastomer-Formteil oder aus einer flexiblen Scheibe bestehen.

Die gelenkige Anbindung des Zentralrohres durch einen Rundschnurring aus einem Elastomermaterial erfolgt in der Weise, daß der Ring in einem Anschlußflansch einer Kupplungslocke eingelegt ist, der flanschfrei das Zentralrohr über den Innendurchmesser zentriert.

Nach einer weiteren Ausführung kann das Verbindungsgelenk auch als Gelenklager, bestehend aus einem Außen- und Innenring, ausgeführt sein, die jeweils gewölbte Gleitflächen aufweisen und eine Taumelbewegung des Motors, verursacht durch freie Massenkräfte, zum Tragrohr mit angebundenem Getriebe zulassen. Hierdurch werden die Lagerstellen des Getriebes von Biegeschwingungen weitestgehend freigehalten. Das Gelenklager ist in der Weise ausgeführt, daß es radial spielfrei ist, aber axiale Kräfte übertragen kann und äußerst reibungsfrei ausgebildet ist.

Die Anordnung des Gelenklagers ist am freien, dem Motor zugerichteten Ende des Tragrohrs vorgesehen, wobei der Innenring in einer Aufnahme gehalten wird, die mit dem Tragrohr verbunden ist. Diese Aufnahme kann entweder aus einer auf das Rohr aufsteckbaren Hülse der aber aus einem verlängerten Rohrteil bestehen.

Das Außenrohr stützt sich endseitig am Kupplungsgehäuse ab und ist von einem Spannring gehalten, der mit einem Kupplungsgehäuse verbunden wird. Damit die Lagerung auf dem Innenring in einfacher Weise durchführbar ist, weist dieser Längsschlitze auf, die ein Aufschieben auf die gewölbte Gleitfläche des Innenringes ermöglichen

Ein am Lageraußenring in einer Nut eingelegter Gummi-Rundschnurring verhindert durch seine Vorspannung ein Klapperspiel in den Gehäuseteilen. Außerdem wird durch ihn Spielfreiheit im Lager über die gesamte Lebensdauer erreicht.

Eine Übertragung von Kräften bei einem Crash mit niedriger Geschwindigkeit vom Motor über das Gelenk und das Stützlager/Querträger auf den Fahrzeugboden wird ohne Beschädigung desLagers abgestützt.

Die Werkstoffpaarung von Innen- und Außenring ist so gewählt, daß der aus Kunststoff bestehende Außenring auf einer Chromschicht des metallischen Innenringes gleitet. Die Verbindung der im Zentralrohr durchgeführten Antriebswelle oder einem Zentralwellenrohr mit der motorseitigen Ausgangswelle erfolgt z.B. über ein bogenverzahntes Ende der Welle, das in eine entsprechende Verzahnung in einer Hülse der Ausgangswelle eingreift.

Andere Lösungen der Verbindung zwischen der Ausgangswelle und der Zentralwelle können aus einem Gleichlaufgelenk oder einer Elastomerscheibe bestehen.

In vorteilhafter weise ist das Drehmomentübertragende Gelenk, insbesondere ein Kardangelenk, mit einer zentrischen Öffnung versehen. Hierdurch wird es möglich, die Kupplungswelle von einer Antriebsstellung in eine Reparaturstellung axial im Zentralwellenrohr zu verschieben, damit ein schneller Ausbau der Kupplung erfolgen kann.

Um eine wirksame Schwingungsabkopplung zwischen Motor und Getriebe mit starr verbundenem Zentralrohr zu erzielen, soll das Zentralrohr leicht und biegesteif sein, wobei eine verminderte Torsionssteifigkeit und eine hohe Biegesteifigkeit erwünscht ist. Um dies zu erreichen bietet sich ein Zentralrohr aus Faserverbundmaterial an.

Die gelenkige Verbindung zum Zentralrohr bzw. zur Antriebswelle soll wegen der geringen Vibrationsanregung so nahe wie möglich am Motor angeordnet sein. Desweiteren sollen die Lagerorte der Antriebswelle im Bereich einer geringen Zentralrohranregung festgelegt werden.

Ausführungsbeispiele der Erfindung sind in der Zeichnung dargestellt und werden im folgenden näher beschrieben.
Es zeigen
- Fig. 1: ein Antriebsaggregat, bestehend aus einem den Motor mit dem Getriebe verbindenden Zentralrohr,
- Fig. 2 bis 4: beispielhafte Darstellungen des Motors mit seinenwesentlichen Hauptanregungsrichtungen,
- Fig. 7: ein Rundschnurring als Abkoppelungseinrichtung,
- Fig. 8: eine Elastomerscheibe als Abkoppelungseinrichtung,
- Fig. 9: eine flexible Scheibe oder ein Stahlscheibenpaket als Abkoppelungseinrichtung,
- Fig. 10: eine Draufsicht auf die flexible Scheibe gemäß Fig. 9,
- Fig. 11: eine Seitenansicht auf das Antriebsaggregat mit einem als Abkoppelungseinrichtung ausgebildeten Rundschnurring und mit einer getriebeseitigen Momentabstützung,
- Fig. 12: eine Darstellung eines freien Endes der Antriebswelle mit einer Bogenverzahnung,
- Fig. 13: eine schaubildliche Darstellung einer Verbindung zwischen einer Antriebswelle und einer motorseitigen Ausgangswelle,
- Fig. 14: eine Verbindung der Antriebswelle mit der Ausgangswelle über ein Gleichlaufgelenk,
- Fig. 15: eine Verbindung der Antriebswelle mit der Ausgangswelle über eine Elastomerscheibe
- Fig. 16: ein Diagramm mit der Darstellung über die Geräuschabsenkung eines gelenkig gehaltenen Zentralrohres gegenüber einem starr angebundenen Zentralrohr,

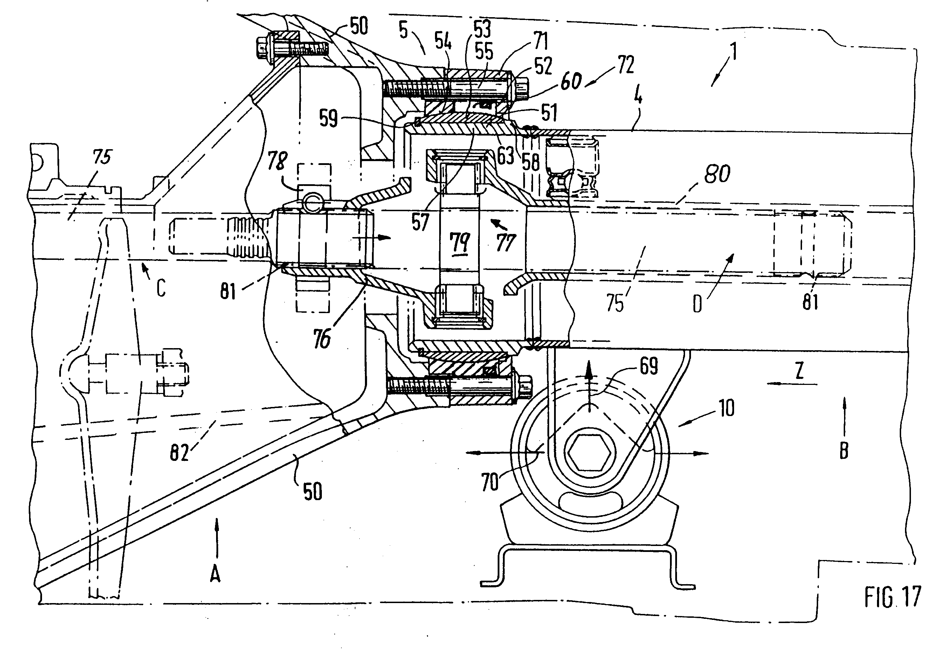

- Fig. 17: eine Darstellung des als Gelenklager ausgebildeten Verbindungsgelenks zwischen Tragrohr und Motor,
- Fig. 18: eine vergrößerte Darstellung des Verbindungsgelenks gemäß Fig. 3 mit Spannring,
- Fig. 19: eine Ausführungsvariante des Verbindungsgelenks mit einem am Tragrohr angesetzten Innenring des Gelenks, und
- Fig. 20: eine Ausführungsvariante des Verbindungsgelenks mit einem auf das Tragrohr aufgesetzten Innenring.

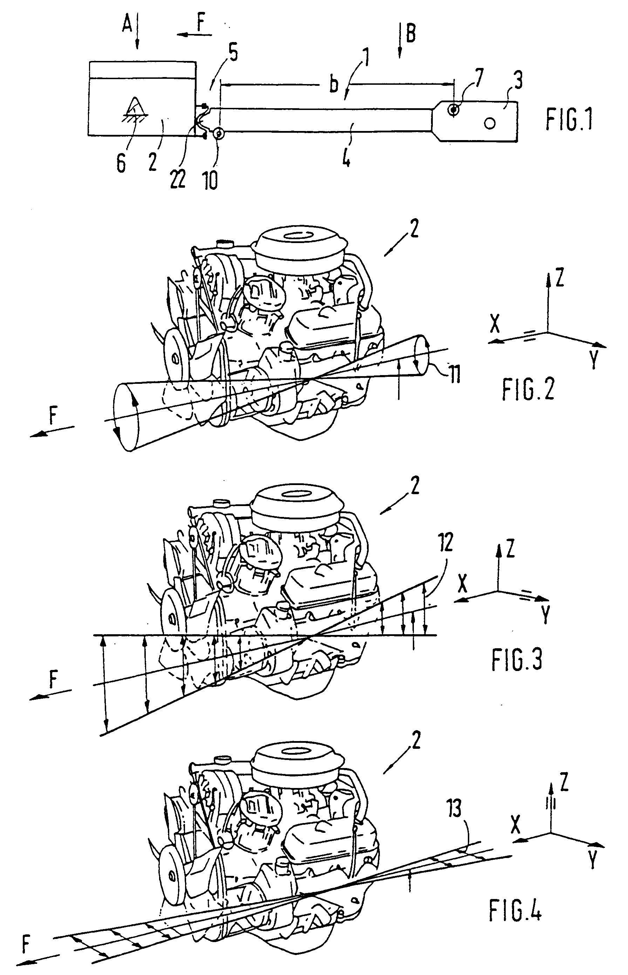

Das Antriebsaggregat 1 umfasst im wesentlichen einen vornliegenden Motor 2 mit einem Gehäusehals bzw. einem Kupplungsgehäuse 50 und eine hintenliegende Antriebseinheit 3 sowie ein mit dieser fest verbundenes Zentralrohr 4, das mit dem Motor 2 über eine Abkoppelungseinrichtung 5 verbunden ist. Der Motor 2 ist über wenigstens zwei Lager 6 und die Antriebseinheit 3, 4 ist über wenigstens ein Lager 7 am Fahrzeugaufbau abgestützt. Ein weiteres Lager 10 kann am Zentralrohr 4 oder am Motor 2 vorgesehen sein, wie in Fig. 1 näher dargestellt ist.

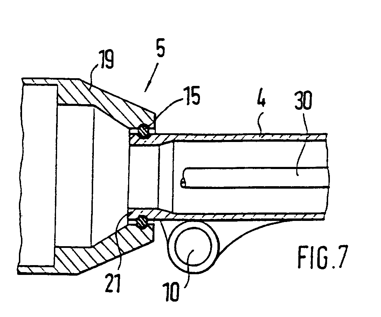

In den Fig. 2 bis 4 ist der Motor 2 mit seinen Hauptanregungsrichtungen dargestellt, wobei diese bei jeder Bauform des Motors auftreten können. In Fig. 2 ist die Hauptanregungsrichtung des Motors 2 kreisförmig in Pfeilrichtung 11 und in Fig. 3 ist die Hauptanregungsrichtung in Z-Hochrichtung (Pfeilrichtung 12) und in Fig. 4 ist die Hauptanregungsrichtung in Y-Querrichtung (Pfeilrichtung 13) gezeigt.

Um diese wesentlichen Hauptanregungsrichtungen berücksichtigen zu können, kann die Abkoppelungseinrichtung 5 entsprechend ausgelegt und abgestimmt werden, so daß sich zwei über das Gelenk reagierende Schwingungssysteme A und B, nämlich des Motors 1 und des übrigen Aggregats, bestehend aus dem Getriebe 3 mit angebundenem Zentralrohr 4 bilden.

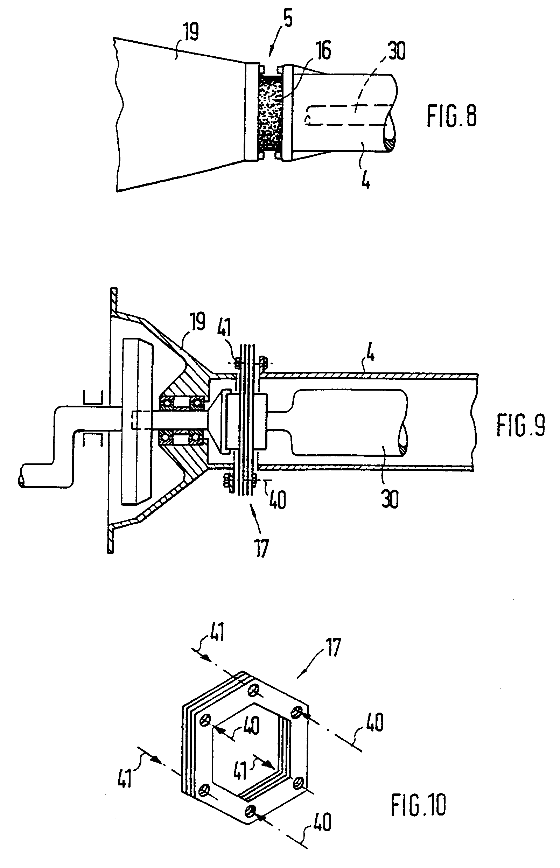

Die Abkoppelungseinrichtung 5 kann z.B. aus einem Rundschnurring 15 (Fig. 7), einem Elastomer-Formteil 16 (Fig. 8) oder einer flexiblen Scheibe 17 (Fig. 9) bestehen oder einem als Gelenklager ausgebildeten Verbindungsgelenk 72; 73; 74 bestehen.

Das als Abkoppelungseinrichtung 5 wirkende Gelenk wird gemäß der Hauptanregungsrichtung des Motors 2, wie in den Fig. 3 und 4 näher dargestellt, abgestimmt. So ist bei einer Hauptanregung in Hochrichtung 12 eine Bewegung um eine Y-Lagerachse des Gelenks 14 und bei einer Hauptanregung in Querrichtung 13 ist eine Bewegung des Motors 2 um eine Z-Lagerachse des Gelenks möglich. In anderen Richtungen erfolgt nur eine unwesentliche Bewegung des Motors. Bei überlagerten Bewegungen des Motors 2 sowohl um eine Y-Lagerachse als auch um eine Z-Lagerachse bietet das Gelenk eine ausreichende Möglichkeit, auch diese Bewegungen in beiden Ebenen entkoppelt zum übrigen Aggregat 3 und 4 durchzuführen und dennoch Torsionsmomente zu übertragen, womit ein Gesamtaggregat mit einer geringen Anzahl von Lagerstellen im Fahrzeug gewährleistet ist.

Bei einer torsionsweichen Anordnung des Zentralrohrs 4 zum Motor 2, z.B. über einen Rundschnurring 15 oder einer zwischengesetzten Elastomerscheibe 16 als Abkoppelungseinrichtung 5 erfolgt eine Abstützung des Getriebeeingangs mittels am Gehäuse der Antriebseinheit 3 befestigten Konsolen 25, 26, die sich über die Lager 8 und 9 am Fahrzeugaufbau abstützen. In diesem Fall können auch offene Profile für das Tragrohr verwendet werden, da keine Ansprüche an die Torsionsübertragung gestellt werden.

Der Rundschnurring 15 ist zwischen dem freien Ende 27 des Zentralrohrs 4 und dem Hals 19 des Motorgehäuses angeordnet und hält das Zentralrohr 4 klemmend im Gehäuse des Motors 2.

Bei der Ausführung nach den Fig. 9 und 10 ist ein flexibles Stahlscheibenpaket 17 einerseits am Hals 19 des Gehäuses und andererseits am freien Ende des Zentralrohres 4 befestigt. Wie Fig. 9 näher zeigt, sind die Schrauben 41 mit dem Zentralrohr 4 und die Schrauben 40 mit dem Kupplungsgehäuse 19 verbunden.

Die Abkoppelungseinrichtung 5 besteht aus einem als Gelenklager ausgeführten Verbindungsgelenk 72; 73; 74 mit unterschiedlicher Ausbildung. Das Gelenk 72 umfasst einen Innenring 51 und einen Außenring 52, die Winkel-Bewegungen zwischen dem vornliegenden Motor 2 mit Kupplungsgehäuse 50 und dem Zentralrohr zulassen. Sie weisen jeweils gewölbte Gleitflächen auf, wobei die Gleitfläche 53 des Innenringes 51 nach außen gewölbt ist und die Gleitfläche 54 des Außenringes 52 entsprechend nach innen gewölbt ist. Die Wölbungen sind vorzugsweise als Kreisbogenabschnitte ausgeführt.

Der Innenring 51 der Einrichtung 5 ist mit dem Tragrohr 4 verbunden, wobei der aufgesetzte Außenring 52 über Schrauben 55 am Kupplungsgehäuse 50 befestigt ist, die wiederum mit dem Motorgehäuse verbunden wird, was nicht näher dargestellt ist.

Es sind verschiedene Ausführungen des Verbindungsgelenks hinsichtlich der Befestigung des Innenringes 51 mit dem Tragrohr 4 und dem Außenring 52 mit dem Kupplungsgehäuse 50 möglich.

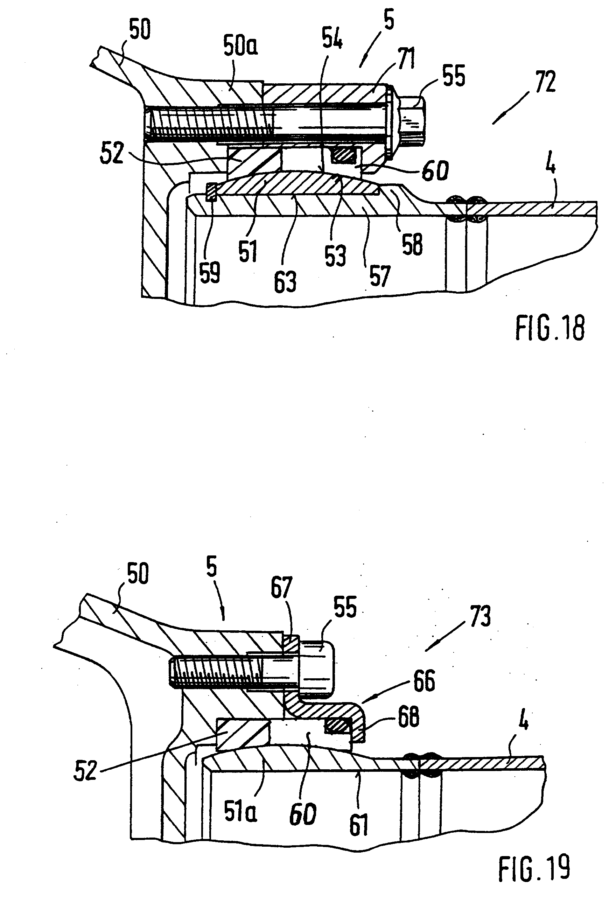

So ist bei der Ausführung des Verbindungsgelenks 72 gemäß Fig.18 der Innenring 51 in einer Aufnahme 63 eines Rohrteils 57 zwischen einem Ringansatz 58 und einem Sperring 59 eingespannt gehalten. Das Rohrteil 57 ist in Verlängerung des Tragrohres 4 angeordnet und mit diesem fest verbunden.

Der Außenring 52 ist zwischen dem Kupplungsgehäuse 50 und einem Spannring 71 gehalten, der diesen stirnseitig sowie am Umfang übergreift.

Zum Überstecken des Außenringes 52 auf den Innenring 51 ist dieser mit Längsschlitzen 60 versehen, die über den Umfang verteilt angeordnet sind und sich etwa über die halbe Länge des Ringes 52 erstrecken.

Nach einer weiteren Ausführung der Abkoppelungseinrichtung 5 gemäß Fig. 19 mit dem Verbindungsgelenk 73 ist der Innenring 51a an ein Rohrstück 61 angeformt bzw. in ein Rohrstück 61 eingearbeitet, das beispielsweise mit dem Zentralrohr 4 durch eine Schweißung fest verbunden wird.

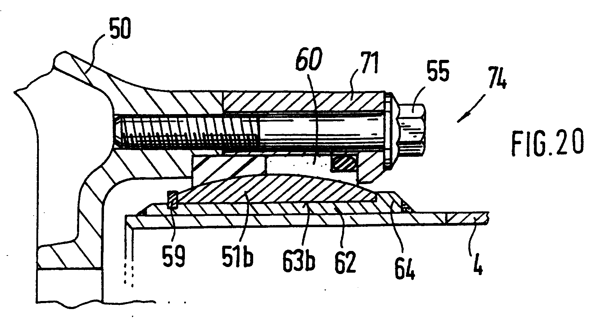

Nach der Ausführung der Abkoppelungseinrichtung 5 mit dem Verbindungsgelenk 74 gemäß Fig. 20 ist der Innenring 51b auf einer Hülse 62 gehalten, die mit dem Zentralrohr 4 fest verbunden ist. Die Hülse 62 umfasst eine Aufnahme 63b, welche an einem Ende einen Ringabsatz 64 aufweist, an den sich der Ring 51b stirnseitig abstützt. Am gegenüberliegenden Ende ist der Ring 51b über den Sperring 59 gehalten. Die Verbindung des Außenringes 52 mit dem Kupplungsgehäuse 50 kann, wie in Fig. 18 und 20 näher dargestellt, über den Spannring 71 erfolgen oder über ein abgewinkeltes Formelement 66. Der eine Schenkel 67 des Elements stützt sich am Gehäuse 50 ab und der andere Schenkel 68 übergreift die Stirnfläche des Außenringes 52. Mittels Schrauben 55 wird das Formelement 66 am Kupplungsgehäuse 50 festgesetzt.

Unmittelbar benachbart der Abkoppelungseinrichtung 5 ist das Tragrohr 4 über ein Lager 10 zum Fahrzeugaufbau hin abgestützt. Dieses Lager weist eine definierte Kennung auf, wobei es in Hochrichtung 69 und in Querrichtung weicher ausgeführt ist als in Längsrichtung 70. Desweiteren ist es mit einer relativ großen Basis b zum Lager 7 am Getriebe angeordnet.

Das drehmomentübertragende Gelenk 77 ist als Kardangelenk ausgebildet, das eine mit einem Gabelstück 76 verbundene Kupplungswelle 75 aufweist, die über eine Verzahnung 81 im Hals des Gabelstücks antriebsverbunden ist. Eine Befestigung erfolgt über eine Klemmhülse 78. Die Kupplungswelle 75 kann nach einem Lösen der Klemmhülse - welches von außen durch eine von einem Deckel 82 verschlossene Öffnung erfolgt - aus der Antriebsstellung C in Pfeilrichtung in die Reparaturstellung D verschoben werden, wozu das Gelenk 77 eine zentrische Öffnung 79 aufweist. Durch diese axiale Verschiebbarkeit der Kupplungswelle 77 in ein Zentralwellenrohr 80 ist eine einfache und schnelle Austauschbarkeit der Kupplung möglich.

Die Lager 6 des Motors 2 und die Lager 7 bzw. 8 und 9 des Getriebes sind jeweils in vibrationsarmen Zonen des Antriebsaggregats 1 angeordnet. Zur Erzielung einer großen Abstützbasis b zwischen dem Lager 7 bzw. den Lagern 8 und 9 und dem Lager 10 am Zentralrohr 4 ist dies so weit wie möglich an das Motorgehäuse herangerückt, wobei auch die Abkoppelungseinrichtung 5 möglichst nahe ans Motorgehäuse anschließt. Dies ist erforderlich, um bei Bewegungen des Motors 2 große Kippbewegungen an der Abkoppelungseinrichtung 5 zu vermeiden.

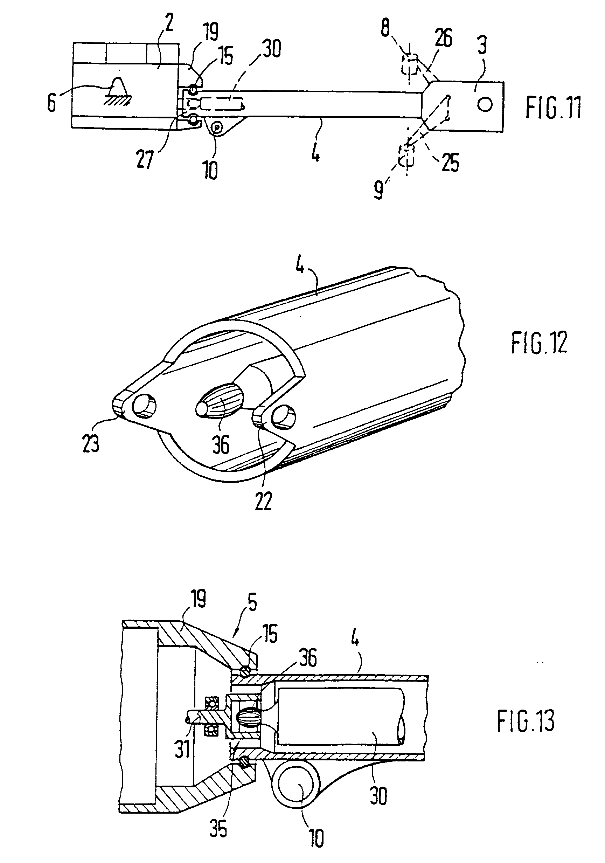

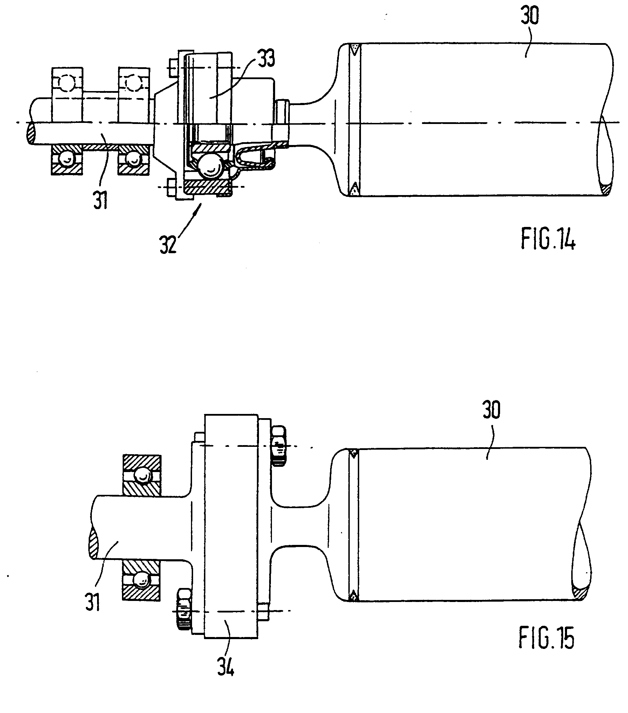

Wie die Fig. 14 und 15 näher zeigen, ist eine im Zentralrohr 4 angeordnete Antriebswelle 30 mit einer motorseitigen Ausgangswelle 31 über eine gelenkige Verbindung 32 antriebsverbunden, die z.B. aus einem Gleichlaufgelenk 33, einer Elastomerscheibe 34 oder aus einer Verzahnungsverbindung 35 bestehen kann. Diese umfasst am freien Ende der Antriebswelle 30 eine Bogenverzahnung 36, die in eine entsprechende Verzahnung in eine Hülse 37 der Ausgangswelle 31 eingreift (Fig. 12).

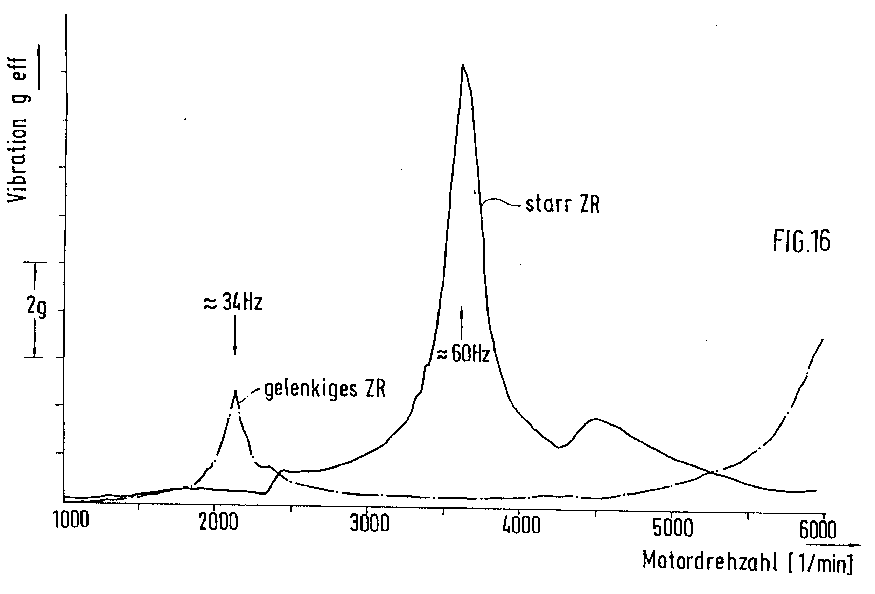

In Fig. 16 zeigt ein Diagramm, bei dem die Vibrationshöhe über die Drehzahl aufgetragen ist, daß ein gelenkig an das Motorgehäuse angebundenes Zentralrohr 4 eine wesentlich tieffrequentere Schwingung aufweist als ein starr mit dem Motorgehäuse verbundenes Zentralrohr 4.

## Patentansprüche

1. Antriebsaggregat für ein Kraftfahrzeug mit einem am Fahrzeugaufbau in Lagern abgestützten vornliegenden Motor und einer hintenliegenden, über wenigstens ein elastisches Lager abgestützten Antriebseinheit und einem dazwischen angeordneten Zentralrohr, das am vorderen Ende mit dem Motor bewegbar und am hinteren Ende mit der Antriebseinheit starr verbunden ist und in der sich eine Antriebswelle erstreckt, die im Bereich ihrer Verbindung zur Kupplungswelle ein drehmomentübertragendes Gelenk aufweist, **dadurch gekennzeichnet**, daß der Motor (2) mit der Antriebseinheit (3, 4) über eine Schwingungsabkoppelungseinrichtung (5) verbunden ist, die ein Verbindungsgelenk (15; 16; 17; 72; 73; 74) umfasst, das den Motor (2) in seinen Hauptanregungseinrichtungen in kreisförmiger Richtung (Pfeilrichtung 11) in Z-Hochrichtung (Pfeilrichtung 12) in Y-Querrichtung (Pfeilrichtung 13) winkelbewegbar hält und zur Drehmomentabstützung der Antriebseinheit (3, 4) das Verbindungsgelenk und/oder eine Lagerungseinrichtung (8, 9) vorgesehen ist, wobei die Lager (6, 7; bzw. 6, 8 und 9) des Motors (2) und der Antriebseinheit (3, 4) in vibrationsarmen Zonen der aus Biege- und Torsionsschwingungen zusammengesetzten Aggregateigenschwingungen angeordnet sind und zwischen den Lagern (7; 8, 9) der Antriebseinheit (3, 4) und einem elastischen Lager (10) am Zentralrohr (4) eine Abstützbasis mit dem Abstand (b) besteht, wobei das Lager (10) am Gelenkteil des Zentralrohres (4) angeordnet ist.

2. Antriebsaggregat nach Anspruch 1, **dadurch gekennzeichnet**, daß es im Bereich des Motors (2) über zwei Lager (6) und im Bereich der Antriebseinheit über ein einziges, in der Symmetrieachse angeordnetes Lager (7) abgestützt ist.

3. Antriebsaggregat nach den Ansprüchen 1 und/oder 2, **dadurch gekennzeichnet**, daß der Motor (2) über das Verbindungsgelenk ( 16; 17; 72; 73; 74) elastisch definiert bewegbar zur Antriebseinheit (3, 4) angeordnet ist.

4. Antriebsaggregat nach den Ansprüchen 1 und 3, **dadurch gekennzeichnet**, daß die Antriebseinheit (3, 4) mit querliegenden Konsolen (25, 26) verbunden ist, wobei jede Konsole endseitig ein Lager (8 bzw. 9) zur Drehmomentabstützung gegenüber dem Fahrzeugaufbau aufweist.

5. Antriebsaggregat nach den Ansprüchen 1, 3 und/oder 4, **dadurch gekennzeichnet**, daß das Verbindungsgelenk (15) aus einem Rundschnurring besteht, der das Zentralrohr (4) in einem Hals (19) des Motorgehäuses zentrierend abstützt.

6. Antriebsaggregat nach den Ansprüchen 1, 3 und/oder 4, **dadurch gekennzeichnet**, daß das Verbindungsgelenk (16) aus einem Elastomer-Formteil besteht, das zwischen dem Hals (19) des Motorgehäuses und dem Zentralrohr (4) angeordnet ist und über anvulkanisierte Stirnplatten am Hals (19) des Motorgehäuses und mit der Stirnfläche des Zentralrohrs (4) verbindbar ist.

7. Antriebsaggregat nach einem oder mehreren der vorhergehenden Ansprüche, **dadurch gekennzeichnet**, daß das Verbindungsgelenk (17) aus einer zwischen dem Hals (19) des Motorgehäuses und der Stirnfläche des Zentralrohrs (4) angeordneten flexiblen Scheiben besteht, die jeweils über eigene Befestigungspunkte sowohl mit dem Zentralrohr (4) als auch mit dem Hals (19) des Kupplungsgehäuses verbunden ist.

8. Antriebsaggregat nach Anspruch 1, **dadurch gekennzeichnet**, daß die Abkoppelungseinrichtung (5) aus einem als Gelenklager ausgebildeten Verbindungsgelenk (72; 73; 74) mit einem Innenring (51; 51a; 51b) und einem Außenring (52) besteht, wobei der Innenring eine gewölbte Außen-Gleitfläche (53) aufweist, auf der eine entsprechend geformte Innen-Gleitfläche (54) des Außenringes (52) geführt ist.

9. Antriebsaggregat nach den Ansprüchen 1 und 8, **dadurch gekennzeichnet**, daß der Innenring (51) mit dem Tragrohr (4) und der Außenring (52) mit einem Gehäuse (50) der Kupplung verbunden ist und das Tragrohr (4) zum Gehäuse (50) schwenk- und drehbeweglich gehalten ist.

10. Antriebsaggregat nach den Ansprüchen 1, 8 und 9, **dadurch gekennzeichnet**, daß der Außenring (52) eine kleinere Gleitfläche aufweist als der Innenring (51).

11. Antriebsaggregat nach den Ansprüchen 1, 8 und 9, **dadurch gekennzeichnet**, daß der Innenring (51) am Ende des Tragrohres (4) in einer ortsfesten Aufnahme (63; 63b) zwischen einem Anschlag (64) und einem Sperring (59) gehalten ist.

12. Antriebsaggregat nach den Ansprüchen 1 und 11**, dadurch gekennzeichnet**, daß die ortsfeste Aufnahme (63b) für den Innenring (51b) in einer auf das Tragrohr (4) aufgesteckten Hülse (62) angeordnet ist.

13. Antriebsaggregat nach den Ansprüchen 1 und 11, **dadurch gekennzeichnet**, daß die ortsfeste Aufnahme (63) aus einer im verlängerten Rohrteil (57) des Tragrohrs (4) ausgebildeten Eindrehung besteht.

14. Antriebsaggregat nach einem oder mehreren der vorhergehenden Ansprüche, **dadurch gekennzeichnet**, daß der Außenring (52) zwischen einem Ansatz (50a) des Gehäuses (50) und einem Spannring (71) angeordnet ist, der den Außenring (52) umgibt und am Gehäuseansatz (50a) über die Schraube (55) befestigbar ist.

15. Antriebsaggregat nach Anspruch 14, **dadurch gekennzeichnet**, daß der Spannring (71) aus einem abgewinkelten Formelement (66) besteht, dessen einer Schenkel (67) über die Schraube (55) mit dem Gehäuse (50) verbunden ist und dessen anderer Schenkel (68) den Außenring (52) übergreift und spannend hält.

16. Antriebsaggregat nach einem oder mehreren der vorhergehenden Ansprüche, **dadurch gekennzeichnet**, daß der Innenring (51; 51a; 51b) aus einem Metall besteht und die Außengleitfläche (53) eine Chromschicht aufweist.

17. Antriebsaggregat nach einem oder mehreren der vorhergehenden Ansprüche, **dadurch gekennzeichnet**, daß der Außenring (52) aus einem Kunststoff besteht.

18. Antriebsaggregat nach Anspruch 1, **dadurch gekennzeichnet**, daß die Antriebswelle (30) am freien Ende eine Bogenverzahnung (36) aufweist, die in Eingriff mit einer korrespondierenden Verzahnung in einer Hülse von einer motorseitigen Ausgangswelle (31) steht.

19. Antriebsaggregat nach Anspruch 1, **dadurch gekennzeichnet**, daß das Tragrohr (4) benachbart des Verbindungsgelenks (72; 73; 74) über ein elastisches Lager (10) abgestützt ist, das in Hochrichtung (69) und in Querrichtung mit einer weicheren Kennung ausgeführt ist als in Längsrichtung (70).

20. Antriebsaggregat nach einem oder mehreren der vorhergehenden Ansprüche, **dadurch gekennzeichnet**, daß die Antriebswelle (30) am freien Ende eine Bogenverzahnung (36) aufweist, die in Eingriff mit einer korrespondierenden Verzahnung in einer Hülse von einer motorseitigen Ausgangswelle (31) steht.

21. Antriebsaggregat nach einem oder mehreren der vorhergehenden Ansprüche, **dadurch gekennzeichnet**, daß die motorseitige Ausgangswelle (31) mit der Antriebswelle (30) über ein Gleichlaufgelenk (33) verbunden ist.

22. Antriebsaggregat nach einem oder mehreren der vorhergehenden Ansprüche, **dadurch gekennzeichnet**, daß die motorseitige Ausgangswelle (31) mit der Antriebswelle (30) über eine Elastomerscheibe (34) verbunden ist.

23. Antriebsaggregat nach Anspruch 1, **dadurch gekennzeichnet**, daß die Kupplungswelle (75) mit einem Gabelstück (76) des drehmomentübertragenden Gelenks (77) über eine Klemmhülse (78) lösbar verbunden ist, wobei ein Gelenkstern des Gelenks (77) eine zentrische Öffnung (79) zum Durchschieben der gelösten Kupplungswelle (78) von einer Antriebsstellung (c) in eine Reparaturstellung (D) in ein Zentralwellenrohr (80) aufweist.

## Claims

1. A drive assembly for a motor vehicle, having a front engine supported in bearings on the vehicle body, and a rear drive unit supported by way of at least one resilient bearing, and a central tube, which is arranged therebetween and which at the front end is connected in a movable manner to the engine and at the rear end is connected in a rigid manner to the drive unit and in which a drive shaft extends which is provided in the region of the connexion thereof to the coupling shaft with a torque-transmitting joint, **characterized in that** the engine (2) is connected to the drive unit (3, 4) by way of a vibration-insulating device (5) comprising a connecting joint (15; 16; 17; 72; 73; 74) retaining the engine (2) angularly movable in the main excitation devices thereof in a rotary direction (direction of arrow 11), in the vertical direction **Z** (direction of arrow 12) [and] in the transverse direction **Y** (direction of arrow 13), and the connecting joint and/or a mounting device (8, 9) is provided for absorbing the torque of the drive unit (3, 4), wherein the bearings (6, 7; or 6, 8 and 9 respectively) of the engine (2) and the drive unit (3, 4) are arranged in low-vibration regions of the natural vibrations of the unit formed by flexural and torsion vibrations and a supporting base is provided on the central tube (4) at a distance (**b**) between the bearings (7; 8, 9) of the drive unit (3, 4) and a resilient bearing (10), wherein the bearing (10) is arranged on the joint part of the central tube (4).

2. A drive assembly according to Claim 1, **characterized in that** it is supported in the region of the engine (2) by way of two bearings (6) and in the region of the drive unit by way of a single bearing (7) situated in the axis of symmetry.

3. A drive assembly according to Claims 1 and/or 2, **characterized in that** the engine (2) is mounted so as to be resiliently movable in a defined manner with respect to the drive unit (3, 4) by way of the connecting joint (16; 17; 72; 73; 74).

4. A drive assembly according to Claims 1 and 3, **characterized in that** the drive unit (3, 4) is connected to transversely arranged brackets (25, 26), wherein each bracket is provided at the end with a bearing (8 and 9 respectively) for absorbing the torque with respect to the vehicle body.

5. A drive assembly according to Claims 1, 3 and/or 4, **characterized in that** the connecting joint (15) comprises a sealing ring supporting the central tube (4) in a centring manner in a neck (19) on the engine housing.

6. A drive assembly according to Claims 1, 3 and/or 4, **characterized in that** the connecting joint (16) comprises a moulded elastomer part arranged between the neck (19) of the engine housing and the central tube (4) and is connectable to the front face of the central tube (4) by way of end plates vulcanized onto the neck (19) of the engine housing.

7. A drive assembly according to one or more of the preceding Claims, **characterized in that** the connecting joint (17) comprises a flexible disc arranged between the neck (19) of the engine housing and the front face of the central tube (4) and connected to both the central tube (4) and the neck (19) of the clutch housing by way of respective separate fastening points.

8. A drive assembly according to Claim 1, **characterized in that** the insulating device (5) comprises a connecting joint (72; 73; 74) constructed as a bearing of a joint and having an inner ring (51; 51a; 51b) and an outer ring (52), wherein the inner ring has a convexly curved outer sliding surface (53) on which a correspondingly shaped inner sliding surface (54) of the outer ring (52) is guided.

9. A drive assembly according to Claims 1 and 8, **characterized in that** the inner ring (51) is connected to the support tube (4) and the outer ring (52) is connected to a housing (50) of the clutch, and the support tube (4) is held so as to be pivotably and rotatably movable with respect to the housing (50).

10. A drive assembly according to Claims 1, 8 and 9, **characterized in that** the outer ring (52) has a smaller sliding surface than the inner ring (51).

11. A drive assembly according to Claims 1, 8 and 9, **characterized in that** the inner ring (51) is held at the end of the support tube (4) in an immovable receiving means (63; 63b) between a stop (64) and a locking ring (59).

12. A drive assembly according to Claims 1 and 11, **characterized in that** the immovable receiving means (63b) for the inner ring (51b) is arranged in a sleeve (62) mounted on the support tube (4).

13. A drive assembly according to Claims 1 and 11, **characterized in that** the immovable receiving means (63) comprises a recess formed in the extended portion (57) of the support tube (4).

14. A drive assembly according to one or more of the preceding Claims, **characterized in that** the outer ring (52) is arranged between an attachment (50a) on the housing (50) and a clamping ring (71) surrounding the outer ring (52) and securable on the housing attachment (50a) by way of the bolt (55).

15. A drive assembly according to Claim 14, **characterized in that** the clamping ring (71) comprises an angled shaped member (66), one arm (67) of which is connected to the housing (5) by way of the bolt (55) and the other arm (68) of which engages over the outer ring (52) and holds it clamped.

16. A drive assembly according to one or more of the preceding Claims, **characterized in that** the inner ring (51; 51a; 51b) consists of a metal and the outer sliding surface (53) has a layer of chromium.

17. A drive assembly according to one or more of the preceding Claims, **characterized in that** the outer ring (52) consists of a plastics material.

18. A drive assembly according to Claim 1, **characterized in that** the free end of the drive shaft (30) comprises spiral teeth (36) engaging with corresponding teeth in a sleeve of an output shaft (31) from the engine.

19. A drive assembly according to Claim 1, **characterized in that** the support tube (4) is supported adjacent to the connecting joint (72; 73; 74) by way of a resilient bearing (10) which is constructed with a weaker characteristic in the vertical direction (69) and the transverse direction than in the longitudinal direction (70).

20. A drive assembly according to one or more of the preceding Claims, **characterized in that** the free end of the drive shaft (30) comprises curved teeth (36) engaging with corresponding teeth in a sleeve of an output shaft (31) from the engine.

21. A drive assembly according to one or more of the preceding Claims, **characterized in that** the output shaft (31) from the engine is connected to the drive shaft (30) by way of a synchronous joint (33).

22. A drive assembly according to one or more of the preceding Claims, **characterized in that** the output shaft (31) from the engine is connected to the drive shaft (30) by way of a disc (34) of elastomer material.

23. A drive assembly according to Claim 1, **characterized in that** the coupling shaft (75) is releasably connected to a fork member (76) of the torque-transmitting joint (77) by way of a clamping sleeve (78), wherein a star-shaped member of the joint (77) comprises a central opening (79) for passing through the released coupling shaft (78) from one driving position (**c**) into a repair position (D) in a central-shaft tube (80).

## Revendications

1. Groupe motopropulseur pour un véhicule avec un moteur situé à l'avant, soutenu dans des paliers sur la carrosserie du véhicule et une unité d'entraînement situeé à l'arrière, soutenue par au moins un palier élastique et un tube central placé entre les deux, qui à l'extrémité avant est déplaçable avec le moteur et à l'extrémité arrière, est relié rigidement à une unité d'entraînement et dans lequel s'étend un arbre d'entraînement, qui dans la région de sa liaison avec l'arbre d'accouplement, présente une articulation transmettant le couple de rotation, caractérisé en ce que le moteur (2) avec l'unité d'entraînement (3, 4) est relié par un dispositif de désaccouplage des oscillations (5), qui comprend une articulation de liaison (15 ; 16 ; 17 ; 72 ; 73 ; 74), qui maintient le moteur (2), de manière déplaçable angulairement, dans ses directions d'excitation principales en direction circulaire (sens de la flèche 11), en direction verticale Z (sens de la flèche 12), en direction transversale Y (sens de la flèche 13) et pour le soutien du couple de rotation de l'unité d'entraînement (3, 4) il est prévu l'articulation de liaison et/ou un dispositif de support (8, 9), les paliers (6, 7 ; ou 6, 8 et 9) du moteur (2) et de l'unité d'entraînement (3, 4) étant situés dans des zones peu sujettes à vibrations des oscillations propres du groupe, constituées des oscillations de flexion et des oscillations de torsion, et entre les paliers (7 ; 8, 9) de l'unité d'entraînement (3, 4) et un palier élastique (10) sur le tube central (4), se trouve une base d'appui à la distance (b), le palier (10) étant placé sur la partie articulée du tube central (4).

2. Groupe motopropulseur selon la revendication 1, caractérisé en ce qu'il est soutenu dans la région du moteur (2) par deux paliers (6) et dans la région de l'unité d'entraînement par un seul palier (7), placé dans l'axe de symétrie.

3. Groupe motopropulseur selon les revendications 1 et/ou 2, caractérisé en ce que le moteur (2) est déplaçable de manière définie élastiquement par l'articulation de liaison (16 ; 17 ; 72 ; 73 ; 74) vers l'unité d'entraînement (3, 4).

4. Groupe motopropulseur selon les revendications 1 et 3, caractérisé en ce que l'unité d'entraînement (3, 4) est reliée à des consoles (25, 26) transversales, chaque console présentant à une extrémité un palier (8 ou 9) pour l'appui du couple de rotation par rapport à la carrosserie du véhicule.

5. Groupe motopropulseur selon les revendications 1, 3 et/ou 4 caractérisé en ce que l'articulation de liaison (15) est constituée d'un anneau en cordon qui soutient en le centrant le tube central (4) dans un collet (19) du carter du moteur.

6. Groupe motopropulseur selon les revendications 1, 3 et/ou 4 caractérisé en ce que l'articulation de liaison (16) est faite d'une pièce profilée en élastomère, qui est placée entre le collet (19) du carter du moteur et le tube central (4) et qui peut être reliée à la face frontale du tube central (4), par des plaques frontales vulcanisées sur le collet (19) du carter du moteur.

7. Groupe motopropulseur selon une ou plusieurs des revendications précédentes, caractérisé en ce que l'articulation de liaison (17) est constituée d'un disque flexible placé entre le collet (19) du carter du moteur et la surface frontale du tube central (4), qui est relié chaque fois par ses propres points de fixation avec le tube central (4) ainsi qu'avec le collet (19) de la boîte d'embrayage.

8. Groupe motopropulseur selon la revendication 1, caractérisé en ce que le dispositif de désaccouplage (5) est constitué d'une articulation de liaison (72 ; 73 ; 74), conçue en palier articulé avec une bague intérieure (51 ; 51a ; 51b) et une bague extérieure (52), la bague intérieure présentant une surface de glissement extérieure (53) courbée sur laquelle est guidée une surface de glissement intérieure (54), de forme correspondante, de la bague extérieure (52).

9. Groupe motopropulseur selon les revendications 1 et 8, caractérisé en ce que la bague intérieure (51) est reliée au tube de support (4) et la bague extérieure (52) à une boîte (50) de l'embrayage et le tube de support (4) est maintenu mobile en pivotement et en rotation par rapport à la boîte (50).

10. Groupe motopropulseur selon les revendications 1, 8 et 9 caractérisé en ce que la bague extérieure (52) présente une surface de glissement plus petite que la bague intérieure (51).

11. Groupe motopropulseur selon les revendications 1, 8 et 9 caractérisé en ce que la bague intérieure (51) est maintenue à l'extrémité du tube de support (4) dans un logement (63 ; 63b) fixe entre une butée (64) et un anneau de blocage (59).

12. Groupe motopropulseur selon les revendications 1 et 11, caractérisé en ce que le logement fixe (63b) pour la bague intérieure (51b) est placé dans un manchon (62) enfilé sur le tube de support (4).

13. Groupe motopropulseur selon les revendications 1 et 11, caractérisé en ce que le logement fixe (63) est constitué d'une gorge tournée dans la partie de tube prolongée (57) du tube de support (4).

14. Groupe motopropulseur selon une ou plusieurs des revendications précédentes, caractérisé en ce que la bague extérieure (52) est placée entre un appendice (50a) de la boîte (50) et une bague de serrage (71), qui entoure la bague extérieure (52) et qui peut être fixée sur l'appendice (50a) de la boîte, par la vis (55).

15. Groupe motopropulseur sel on la revendication 14, caractérisé en ce que la bague de serrage (71) est constituée d'un élément profilé (66) coudé, dont une branche (67) est reliée par la vis (55) à la boîte (50) et dont l'autre branche (66) passe sur la bague extérieure (52) et la maintient en tension.

16. Groupe motopropulseur selon une ou plusieurs des revendications précédentes, caractérisé en ce que la bague intérieure (51 ; 51a ; 51b) est réalisée dans un métal et la surface de glissement extérieure (53) présente une couche de chrome.

17. Groupe motopropulseur selon une ou plusieurs des revendications précédentes, caractérisé en ce que la bague extérieure (52) est réalisée dans une matière plastique.

18. Groupe motopropulseur selon la revendication 1, caractérisé en ce que l'arbre d'entraînement (30) présente à l'extrémité libre, une denture en arc (36), qui est en prise avec une denture correspondante dans un manchon d'un arbre de sortie (31) côté moteur.

19. Groupe motopropulseur selon la revendication 1, caractérisé en ce que le tube de support (4) est soutenu au voisinage de l'articulation de liaison (72 ; 73 ; 74) par un palier élastique (10), qui dans la direction verticale (69) et dans la direction transversale est réalisé avec une caractéristique plus souple que dans la direction longitudinale (70).

20. Groupe motopropulseur selon une ou plusieurs des revendications précédentes, caractérisé en ce que l'arbre d'entraînement (30) présente à l'extrémité libre une denture en arc (36), qui est en prise avec une denture correspondante dans un manchon d'un arbre de sortie (31) côté moteur.

21. Groupe motopropulseur selon une ou plusieurs des revendications précédentes, caractérisé en ce que l'arbre de sortie (31) côté moteur est relié à l'arbre d'entraînement (30), par un joint homocinétique (33).

22. Groupe motopropulseur selon une ou plusieurs des revendications précédentes, caractérisé en ce que l'arbre de sortie (31) côté moteur est relié à l'arbre d'entraînement (30), par un disque en élastomère (34).

23. Groupe motopropulseur selon la revendication 1, caractérisé en ce que l'arbre d'accouplement (75) est relié de manière amovible avec une pièce en fourche (76) de l'articulation (77) transmettant le couple de rotation, par un manchon de serrage (78), une étoile d'articulation de l'articulation (77) présentant une ouverture centrée (79) pour le passage de l'arbre d'accouplement (78) déverrouillé, d'une position d'entraînement (c) dans une position de réparation (D), dans un tube d'arbre central (80).
